# EUROPEAN PATENT APPLICATION

(11) **EP 2 216 920 A1**
(43) Date of publication of application: **11.08.2010**
(21) Application number: 09305120.9
(22) Date of filing: 10.02.2009
(51) Int. Cl.: H04H 60/33, H04L 29/08, H04H 60/13, H04W 4/06

(54) **Method of dating end user's events on a telecom terminal equipments**

(71) Applicant: Gemalto SA, 92190 Meudon (FR)
(72) Inventor: Mallet, Lionel, 13007, MARSEILLE (FR); Zeamari, Ali, 13013, MARSEILLE (FR)

(57) **Abstract**

The invention is a method of dating an event happening on a telecom terminal. A mobile equipment receives first and second broadcasted services. Each service comprises a succession of key transport messages. Each key transport message comprises a time stamp. The first service is activated on said telecom terminal and key transport messages associated to the activated service are sent to a secure element connected to the telecom terminal. The event corresponds to a switch from the first service to the second service on the telecom terminal. The last key transport message received by the secure element for the first service comprises a former time stamp. The first key transport message received by the secure element for the second service comprises a later time stamp. The method comprises the step of computing a date intended to be associated to the event, wherein the date is generated as being equal to the maximum value between the former time stamp and the later time stamp.

## Description

### (Field of the invention)

The present invention relates to methods of dating events on telecom terminal equipments. It relates particularly to methods of dating end user's events in the purpose of broadcast audience monitoring. In particular, the present invention is well suited for the mobile-TV domain.

### (Prior art)

Broadcasted services are used to transmit applicative data like audio or video data. In particular these broadcasted services may be received and exploited on mobile terminal equipments like telecom handsets or hand-held TV receivers. There is a need to accurately date events generated on mobile terminal equipments. User events are generated by user actions on the mobile terminal equipment. For example it may be the start of a selected service, the switch to another service or the stop of the current service. There is a need to have an accurate date stamping of these events. In particular, such a date stamping may be used for monitoring the broadcast audience.

The messages of broadcasted services may contain a data which depends on the real date. Such a data is named a time stamp. In mobile TV domain, current Audience Monitoring solutions are based on an application embedded in a SIM card. The application captures switching events from key transport messages that are received from the terminal equipment. The application extracts the content encryption key out of the received key transport messages. According to the Open Mobile Alliance (OMA) BCast ® standard, the key transport messages are STKM (Short Term Key Message). These key transport messages contain a Time Stamp which allows dating the captured events. Each broadcasted service has its own stream of key transport messages with their own Time Stamps. Key transport messages are re-generated periodically. Their periodicity is called the crypto-period. The Time Stamp they embed is changed at every crypto-period. Crypto-periods of the various STKM streams are not synchronized. Thus, under certain circumstances, the date of the captured events may be in an erratic order. Some events may be dated in the past with respect to their predecessor. This erratic event dating is not compliant with requirements of audience monitoring. A problem is that there is no possibility to reliably date events generated on the telecom handset. In this specification, the word date corresponds to a couple date and time.

### (Summary of the Invention)

An object of the invention is to solve the above mentioned technical problem.

The object of the present invention is a method of dating an event happening on a telecom terminal. First and second services are broadcasted and are received by the mobile equipment. Each broadcasted service comprises a succession of key transport messages. Each key transport message comprises a time stamp. The first service is activated on the telecom terminal. The key transport messages which are associated to the activated service are sent to a secure element that is connected to the telecom terminal. The event corresponds to a switch from the first service to the second service on the telecom terminal. The last key transport message received by the secure element for the first service comprises a former time stamp. The first key transport message received by the secure element for the second service comprises a later time stamp.

When a switch of service occurs, the telecom terminal ceases sending the key transport messages corresponding to the previous activated service to the secure element. From this moment the telecom terminal starts sending the key transport messages corresponding to the new activated service to the secure element. The last key transport message received by the secure element for the first service is the key transport message which is lastly transmitted to the secure element just before the event occurrence. The first key transport message received by the secure element for the second service is the key transport message which is firstly transmitted to the secure element just after the event occurrence.

The method comprises the step of computing a date intended to be associated to the event. The date is generated as being equal to the maximum value between the former time stamp and the later time stamp.

When first and second events occur they are identified by the secure element. The first event is recorded before the second event in the secure element. If a unique date (i.e. the same date) is associated to first and second events, the method may comprise the further step of sorting first and second events so that the event which has been firstly recorded in the secure element is considered as the earlier event.

Advantageously, the step of computing the date may be performed in the secure element.

Alternatively, a distant machine may be able to retrieve data from the secure element via the telecom terminal, and the step of computing the date may be performed in the distant machine.

Advantageously, the key transport messages may be a STKM as defined by the OMA BCAST ® standard.

Another object of the invention is a secure element intended to be connected to a telecom terminal wherein the telecom terminal equipment is intended to receive first and second broadcasted services. Each broadcasted service comprises a succession of key transport messages. Each key transport message comprises a time stamp. First and second broadcasted services are intended to be alternately activated on the telecom terminal. The broadcasted service which has been activated is named the activated broadcasted service or the current broadcasted service. The key transport messages which are associated to the activated broadcasted service are sent to the secure element. The secure element comprises a first means capable of identifying two consecutive key transport messages corresponding to two different broadcasted services. The secure element comprises a second means capable of extracting first and second time stamps contained respectively in the two consecutive key transport messages. The second means is capable of generating a date equal to the maximum value between first and second time stamp.

Another object of the invention is a secure element intended to be connected to a telecom terminal. The telecom terminal equipment is intended to receive first and second broadcasted services. Each broadcasted service comprises a succession of key transport messages. Each key transport message comprises a time stamp. The second broadcasted service is being intended to be activated after the first broadcasted service on said telecom terminal. The key transport messages associated to the activated broadcasted service are sent to the secure element. The secure element comprises a first means capable of identifying two consecutive key transport messages corresponding to two different broadcasted services. The secure element comprises a third means capable of extracting first and second time stamps contained in the two consecutive key transport messages. The third means is capable of associating both first and second time stamps to an identifier of the second broadcasted service.

Advantageously, the secure element may be a smart card.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically a first example of architecture of a secure element of smart card type according to the invention;
- Figure 2 depicts schematically a second example of architecture of a secure element of smart card type according to the invention;
- Figure 3 depicts schematically an example of architecture of a broadcast framework comprising a broadcasting station, a handset device, a distant machine and a secure element according to the invention; and
- Figure 4 depicts schematically an example of events related to two broadcasted services occurring on a handset terminal.

### (Detailed description of the preferred embodiments)

The invention may apply to any type of secure elements. In this specification, the secure element is a SIM smart card but it could be any other kind of secure electronic device intended to treat key transport messages related to broadcasted services.

The invention may apply to any type of mobile TV equipments which use messages comprising a key and a date reference. In this specification, the mobile TV equipment is a telecom handset able to manage broadcasted TV services but it could be any other kind of mobile terminal equipment intended to receive and to use broadcasted services.

The invention may apply to any type of broadcasted services. In this specification, the broadcasted services comply with the OMA-BCast standard but broadcasted services could comply with any other relevant broadcast standards.

An advantage of the invention is to provide a method for reliably dating events independently of the used terminal equipment.

An additional advantage of the invention is to provide a method for reliably dating events without any upgrade or modification required for the used terminal equipment.

Another advantage of the invention is to require a limited bandwidth between the terminal equipment and the connected secure element.

Another advantage of the invention is to be transparent to the user of the terminal equipment. The invention does not require any additional specific user action.

Another advantage of the invention is to allow keeping the chronology of events which occur during a very short duration. In particular, the invention allows keeping the chronological order of several events that happen during a duration which is shorter than a crypto-period. The duration of a crypto-period is generally comprised in the range of 10 seconds up to 30 seconds.

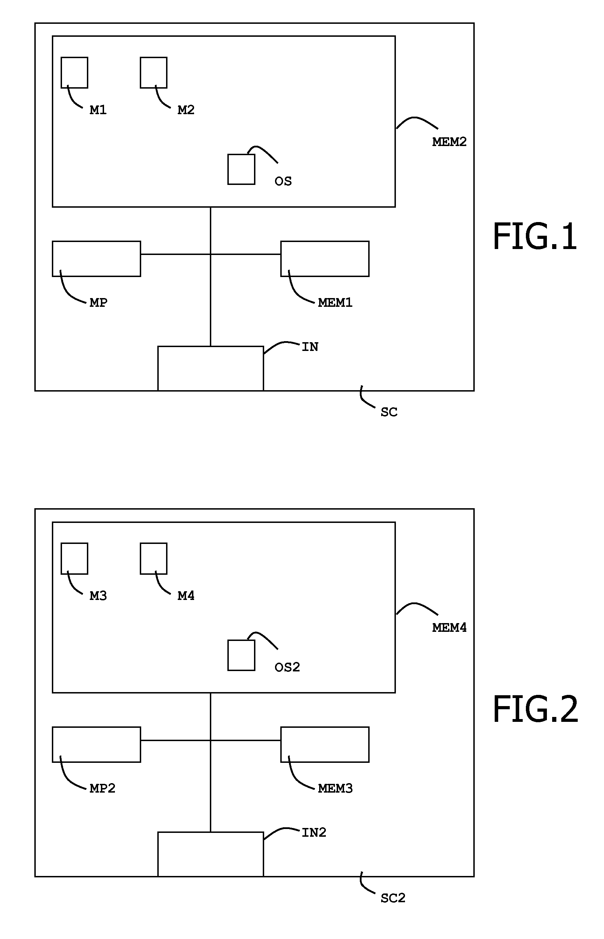

**Figure 1** shows the architecture of a secure element SC of SIM smart card type according to a preferred embodiment of the invention.

The secure element SC comprises a working memory MEM1 of RAM type, a non volatile memory MEM2, a microprocessor MP and a communication interface IN.

The secure element SC is intended to receive key transport messages of STKM type from a connected mobile phone and through the communication interface IN.

The secure element SC comprises an operating system OS. The non volatile memory MEM2 may be NAND flash or EEPROM memory. The non volatile memory MEM2 is intended to store data extracted from the key transport messages received from the connected telecom handset.

The secure element SC comprises two means M1 and M2. The first means M1 is capable of identifying two consecutive key transport messages that correspond to two different broadcasted services. The secure element SC receives two consecutive key transport messages corresponding to two different broadcasted services when a switch from a current service to another service is performed on the connected handset terminal. The second means M2 is capable of extracting each time stamp contained in two consecutive key transport messages. The second means M2 is capable of generating a date which is equal to the maximum value between the two extracted time stamps.

**Figure 2** shows the architecture of a secure element SC2 of SIM smart card type according to a second embodiment of the invention.

The secure element SC2 is similar to the secure element SC of Figure 1.

The secure element SC2 comprises a working memory MEM3 of RAM type, a non volatile memory MEM4, a microprocessor MP2 and a communication interface IN2.

The secure element SC2 is intended to receive key transport messages of STKM type from a connected mobile phone and through the communication interface IN2. The secure element SC2 comprises an operating system OS2. The non volatile memory MEM4 may be NAND flash or EEPROM memory.

The secure element SC2 comprises two means M3 and M4. The means M3 is capable of identifying two consecutive key transport messages that correspond to two different broadcasted services. The means M4 is capable of extracting the time stamp contained in a key transport message. The means M4 is capable of associating the two extracted time stamps to an identifier of the broadcasted service whose key transport message is the last received. In a preferred embodiment, the identifier is extracted from the received key transport message of STKM type.

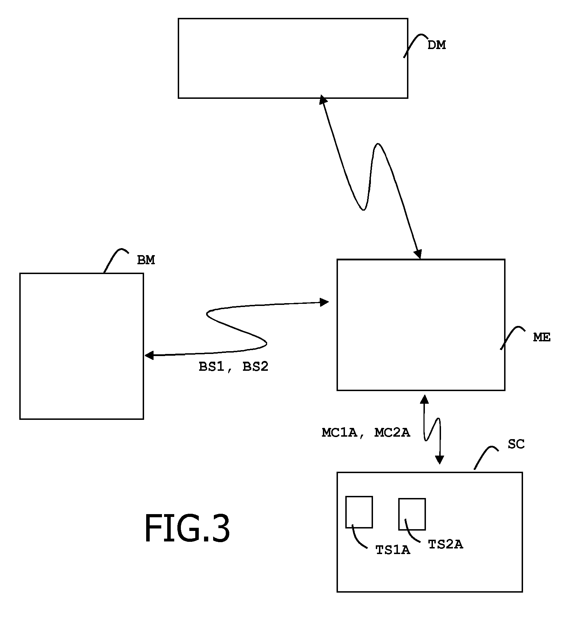

**Figure 3** shows the architecture of a broadcast framework of OMA-BCast type according to a preferred embodiment of the invention.

A broadcasting station BM broadcasts the TV services BS1 and BS2 which are received by a mobile phone ME. A SIM card SC is connected to mobile phone ME. When a broadcasted service has been activated on the mobile phone by the user, the mobile phone ME sends all the key transport messages corresponding to the currently activated broadcasted service to the SIM card SC. A distant machine DM may reach the secure element SC via the mobile phone ME. A communication channel may be established between the distant machine DM and the mobile phone ME when needed. Such communication channel may be established through a wireless network or through Internet.

The broadcasting station BM sends several streams related to broadcasted services BS1 and BS2. For example, two streams EFC and EFS may be sent for each service. The EFS stream is a service stream that contains video services. The EFC stream is a control stream associated to the EFS stream. In particular, the EFC stream may contain key transport messages providing control words which protect the EFS stream content.

The two streams EFC and EFS may be multiplexed in a transport stream. The two types of streams are composed of a series of messages according to OMA-Bcast format. The EFC stream is composed of key transport messages MC1A, MC1B, MC2A, MC2B having identical format and variable contents.

In this example, key transport messages are STKM messages according to the OMA-BCast standard. Detailed information related to STKM message may be found in the "service and content protection" specification of OMA BCast V1.0 standard. A STKM contains a time stamp which has a value reflecting the real date/time.

The two types of stream are received by the mobile terminal equipment ME.

The EFC stream corresponding to the service selected by the user is sent by the terminal ME to the secure element SC. In other words the STKM messages corresponding to the activated broadcasted service are sent to the secure element SC by the terminal ME. When a broadcasted service is activated on the telecom terminal, the activated service is called the current service. While the activated service remains the current service, STKMs related to the current service are sent in succession to the connected secure element SC by the telecom terminal ME.

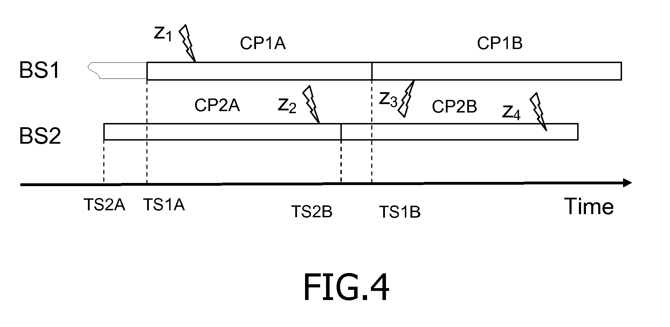

**Figure 4** shows an example of events related to the broadcasted services. The events Z1, Z2, Z3 and Z4 happen on the mobile phone.

In Figure 4, two broadcasted services BS1 and BS2 are supposed to be received by the telecom handset ME.

Two crypto-periods CP1A and CP1B are shown for the broadcasted service BS1. The time stamp TS1A is associated to the crypto-period CP1A. The time stamp TS1B is associated to the crypto-period CP1B. Two crypto-periods CP2A and CP2B are drawn for the broadcasted service BS2. The time stamp TS2A is associated to the crypto-period CP2A and the time stamp TS2B is associated to the crypto-period CP2B. Generally the time stamp associated to a crypto-period contains a value which reflects the date/time of the beginning of crypto-period. Due to a time lag between the crypto-period sequences of BS1 and BS2, the time stamp TS1A corresponds to a date/time more recent than the time stamp TS2A. It is assumed that the time stamps are coded by using an increasing counter. Thus the time stamp TS2A has a value lower than the time stamp TS1A value.

The key transport message MC1A is sent to the secure element SC during the crypto-period CP1A. MC1B is sent to SC during CP1B. MC2A is sent to SC during CP2A. MC2B is sent to SC during MC2B.

The first event Z1 corresponds to the start of the service BS1 on the mobile phone. The start of the service BS1 is the start of the use of the service BS1 on the mobile phone. For example, the user of the mobile phone started the display of the TV channel broadcasted through BS1.

The second event Z2 corresponds to the switch to the service BS2 on the mobile phone. In other word, the switch event corresponds to the fact that the service BS1 is ended and the service BS2 is started.

The third event Z3 corresponds to the switch to the service BS1 on the mobile phone. Thus the service BS2 is ended and the service BS1 is started again.

The fourth event Z4 corresponds to the switch to the service BS2 from the service BS1.

The chronological order of the user's events is Z1, Z2, Z3, and then Z4.

The event Z1 occurs when the current crypto-period of BS1 is CP1A. The event Z2 occurs when the current crypto-period of BS2 is CP2A. The event Z3 occurs when the current crypto-period of BS1 is CP1B. The event Z4 occurs when the current crypto-period of BS2 is CP2B.

If the date assigned to each event is the time stamp which is associated to the current crypto-period of the started service, the assigned dates are as follows. TS1A is assigned to event Z1. TS2A is assigned to event Z2. TS1B is assigned to event Z3. TS2B is assigned to event Z4. Thus by sorting the events according to their associated time stamp, the result is: Z2, Z1, Z4, and then Z3. This result does not match with the true chronological order of the user events.

In order to avoid the above presented problem, the invention relies on the fact that the date of a switch event is computed from both the started service parameters and from the ended service parameters. According to the invention, the date assigned to each switch event is the time stamp which is the more recent among the time stamp associated to the current crypto-period of the ended service and the time stamp associated to the current crypto-period of the started service. The current crypto-period is the crypto-period which is current when the event happens. Assuming that the values of time stamps are increasing according to the real time, the selection of the more recent time stamp may be carried out by selecting the time stamp containing the highest value.

According to the invention, the assigned dates are as follows. TS1A is assigned to event Z2 since TS1A is more recent than TS2A. TS1B is assigned to event Z3 since TS1B is more recent than TS2B. TS1B is assigned to event Z4. Since Z1 is not a switching event, the only time stamp available for Z1 is the time stamp TS1A which is associated to the current crypto-period CP1A of the started service BS1.

According to the invention, the events Z1 and Z2 have the same time stamp TS1A. Similarly, the events Z3 and Z4 have the same time stamp TS1B. In order to keep the order corresponding to the correct chronology, the event which is first received by the secure element SC is assumed to have occurred before the second one. Thus the secure element SC is able to decide between the two events Z1 and Z2. The SIM card SC is able to find that event Z1 occurred before event Z2 and that event Z3 occurred before event Z4. Thus by sorting the events according to the invention, the result is: Z1, Z2, Z3, and then Z4. This result does match with the true chronological order of the user's events.

Advantageously, the date DT1 intended to be associated to the event Z2 is computed in the secure element SC. The date DT1 may be computed by setting DT1 with the value of the highest time stamp associated to the event Z2. Thus the secure element SC stores a sequence of couples (event, date) which may be subsequently retrieved by the distant machine DM in order to perform audience monitoring services.

Alternatively, the date DT1 intended to be associated to the event Z2 may be computed in the distant machine DM. In this case, the secure element SC stores a set made of an event + two time stamps for a switch event. For an event different from a switch event, the secure element SC stores a set made of an event + one time stamp only. Then the distant machine DM retrieves the sets generated on the secure element SC. Start events and switch events may be identified through an identifier of the broadcasted service which is activated. The identifier of the broadcasted service may be retrieved from the corresponding key transport messages.

## Claims

1. A **method** of dating an event (Z2) happening on a telecom terminal (ME), first and second services (BS1, BS2) being broadcasted and received by the mobile equipment (ME), each service (BS1, BS2) comprising a succession of key transport messages (MC1A, MC1B), each key transport message (MC1A, MC1B) comprising a time stamp (TS1A, TS1B), the first service (BS1) being activated on said telecom terminal (ME), key transport messages (MC1A, MC1B) associated to the activated service (BS1, BS2) being sent to a secure element (SC) connected to the telecom terminal (ME), said event (Z2) corresponding to a switch from the first service (BS1) to the second service (BS2) on the telecom terminal (ME), the last key transport message (MC1A) received by the secure element (SC) for the first service (BS1) comprising a former time stamp (TS1A), the first key transport message (MC2A) received by the secure element (SC) for the second service (BS2) comprising a later time stamp (TS2A), said method comprising the step of computing a date (DT1) intended to be associated to said event (Z2),
**characterized in that** the date (DT1) is generated as being equal to the maximum value between the former time stamp (TS1A) and the later time stamp (TS2A).

2. A method according to claim 1, wherein first and second events (Z1, Z2) are identified by the secure element (SC), said first event (Z1) being recorded before the second event (Z2) in the secure element (SC), wherein a unique date (DT1) is associated to first and second events (Z1, Z2), and wherein said method comprises the further step of sorting first and second events (Z1, Z2) so that the event (Z1) firstly recorded in the secure element (SC) is considered as the earlier event.

3. A method according to one of claims 1 to 2, wherein the step of computing the date (DT1) is performed in the secure element (SC).

4. A method according to one of claims 1 to 2, wherein a distant machine (DM) is able to retrieve data from the secure element (SC) via the telecom terminal (ME), and wherein the step of computing the date (DT1) is performed in the distant machine (DM).

5. A method according to one of claims 1 to 4, wherein the key transport messages (MC1A, MC1B) are STKM as defined by the OMA BCAST ® standard.

6. A **secure element** (SC) intended to be connected to a telecom terminal (ME), said telecom terminal equipment (ME) being intended to receive first and second broadcasted services (BS1, BS2), each broadcasted service (BS1, BS2) comprising a succession of key transport messages (MC1A, MC1B), each key transport message (MC1A, MC1B) comprising a time stamp (TS1A, TS1B), first and second broadcasted services (BS1, BS2) being intended to be alternately activated on said telecom terminal (ME), key transport messages (MC1A, MC1B) associated to the activated broadcasted service (BS1, BS2) being sent to the secure element (SC),
**characterized in that** said secure element (SC) comprises:
- a first means (M1) able to identify two consecutive key transport messages (MC1A, MC1B) corresponding to two different broadcasted services (BS1, BS2),
- a second means (M2) able to extract first and second time stamps (TS1A, TS1B) contained in the two consecutive key transport messages (MC1A, MC1B), and to generate a date (DT1) equal to the maximum value between first and second time stamp (TS1A, TS1B).

7. A **secure element** (SC2) intended to be connected to a telecom terminal (ME), said telecom terminal equipment (ME) being intended to receive first and second broadcasted services (BS1, BS2), each broadcasted service (BS1, BS2) comprising a succession of key transport messages (MC1A, MC1B), each key transport message (MC1A, MC1B) comprising a time stamp (TS1A, TS1B), the second broadcasted service (BS2) being intended to be activated after the first broadcasted service (BS1) on said telecom terminal (ME), key transport messages (MC1A, MC1B) associated to the activated broadcasted service (BS1, BS2) being sent to the secure element (SC2),
**characterized in that** said secure element (SC2) comprises:
- a first means (M3) able to identify two consecutive key transport messages (MC1A, MC1B) corresponding to two different broadcasted services (BS1, BS2),
- a third means (M4) able to extract first and second time stamps (TS1A, TS1B) contained in the two consecutive key transport messages (MC1A, MC1B), and able to associate both first and second time stamps (TS1A, TS1B) to an identifier of the second broadcasted service (BS2).

8. A secure element (SC, SC2) according to one of claims 6 to 7, **characterized in that** said secure element is a smart card.
